# EUROPÄISCHE PATENTANMELDUNG

(11) **EP 1 662 752 A1**
(43) Veröffentlichungstag der Anmeldung: **31.05.2006**
(21) Anmeldenummer: 04028083.6
(22) Anmeldetag: 26.11.2004
(51) Int. Cl.: H04L 29/12

(54) **Verfahren zur Konfigurierung eines Gerätes mit DHCP über PPPoE**

(71) Anmelder: Siemens Schweiz AG, 8047 Zürich (CH)
(72) Erfinder: Schweizer, Walter, 8047 Zürich (CH); Schenk, Michael, 8442 Hettlingen (CH)
(74) Vertreter: Kley, Hansjörg

(57) **Zusammenfassung**

Bei Verwendung des Protokolls PPPoE ist in einem Zugangsserver BRAS (1) ein DHCP Relay Agent erforderlich, weil die Anfragen von den Zugangsgeräten (4) als Broadcast gesendet werden. Diese Broadcast-Meldungen werden unter dem Protokoll PPPoE nicht unterstützt oder sogar gefiltert, wie dies im <<DSL Forum Technical Report>> TR-044 [1] spezifiziert ist. Durch das vorgeschlagene Verfahren wird dieser Nachteil dadurch behoben, indem im Zugangserver BRAS (10) die IP-Adresse eines DHCP-Servers (14) mit der IP-Adresse eines DNS-Dienstes (14) gleichgesetzt wird. Dadurch können von den zu konfigurierenden Geräten (4) sogenannte Unicasts gesendet werden, die vom Zugangsserver BRAS (10) transparent durchgereicht werden.

## Beschreibung

Die vorliegende Erfindung betrifft ein Verfahren zur Konfigurierung eines Gerätes mit dem Protokoll DHCP über das Protokoll PPPoE gemäss dem Oberbegriff des Patentanspruchs 1.

Zur Vermeidung von Unklarheiten und im Sinne einer konzisen Fachsprache wird in dieser Schrift teilweise auf die englischsprachigen Fachbegriffe und die geläufigen Akronyme zurückgegriffen. Zur Erläuterung der verwendeten Fachbegriffe und Akronyme wird auf die am Schluss dieses Dokuments angegebene Listen verwiesen, die einen integrierenden Teil dieses Dokumentes bildet. DHCP steht als Akronym für «Dynamic Host Configuration Protocol» gemäss RFC 2131 (March 1997) und PPPoE für Point-to-Point Protocol over Ethernet.

Unter dem Begriff Gerät ist im Sinne der Kommunikationstechnik ein Teilnehmergerät zu verstehen, über das ein Dienst abgewickelt werden kann, z.B. Sprach- oder Datenübermittlung.

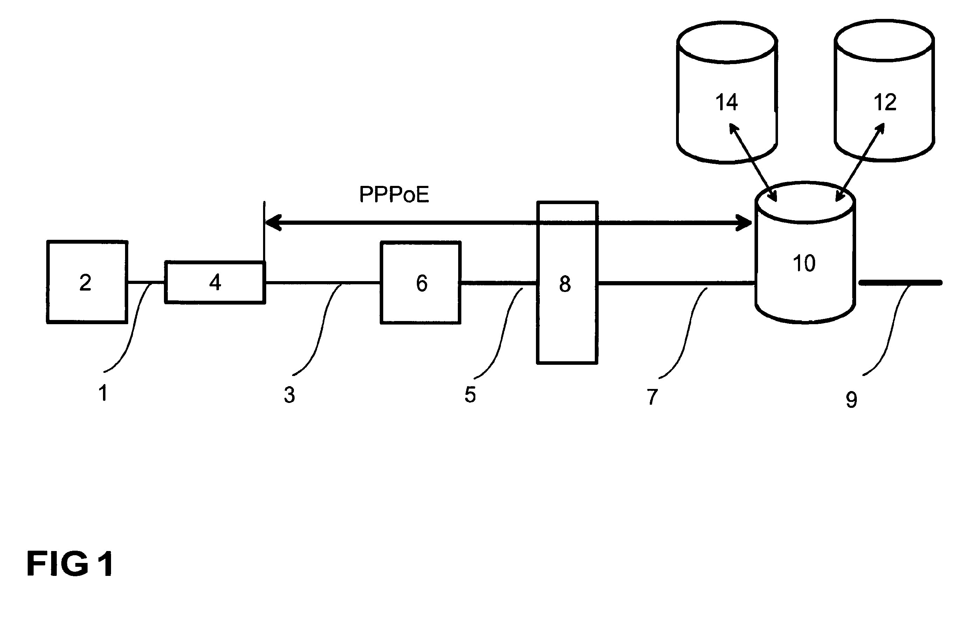

Bezüglich der in diesem Dokument verwendeten Nomenklatur bilden die Schriften «DSL Forum Technical Report» TR-044 [1] und «DSL Forum Technical Report» TR-046 [2] einen integrierenden Bestandteil. In obigem Kontext geht es hier um das Gebiet der Anbindung von Teilnehmergeräten und von Breitband-Netzabschlussgeräten B-NT - auch Settop-Boxen genannt - an einen Internet-Dienst. Wie in Figur 1 dargestellt, ist ein Teilnehmergerät 2 an ein Netzabschlussgerät B-NT 4 angeschlossen, dass seinerseits über eine xDSL-Strecke 3 mit einem «Broadband Remote Access Server» 10 verbindbar ist. Der Server 10 wird im folgenden auch mit «BRAS» abgekürzt. Auf Schicht 3 erfolgt die Kommunikation zwischen B-NT 4 und BRAS 10 mit dem Protokoll PPPoE. Dazu ist erforderlich, dass dem Gerät 4 bzw. die Settop-Box 4 eine IP-Adresse zugewiesen wird. Neben der Vergabe eine IP-Adresse und der Adresse des DNS Servers, die durch PPPoE gemacht wird, soll die Settop-Box 4 mit dem Protokoll DHCP fernkonfiguriert werden. Aus der Standardisierung gemäss «DSL Forum Technical Report» TR-044 [1] ist folgende Lösung vorgesehen: Von der Settop-Box 4 wird eine Meldung «DHCP_INFORM» an den BRAS 2 gesandt, siehe dazu im einzelnen Ziffer 4.1.4 in [1]. Bei Verwendung des Protokolls PPPoE ist jedoch im BRAS ein DHCP Relay Agent erforderlich, weil die Anfrage (=Meldung) als Broadcast gesendet wird. Von den eingesetzten Routern wie z.B. dem BRAS 10 werden Broadcast-Meldungen unter dem Protokoll PPPoE nicht unterstützt oder sogar gefiltert, siehe im einzelnen Ziffer 6.1 des «DSL Forum Technical Report» TR-044 [1].

Im Sinne dieser Schrift wird mit dem Begriff Gerät irgend ein Gerät subsummiert, das über das Protokoll PPPoE mit einem Zugangsserver verbindbar ist. Beispielsweise ist ein solches Gerät (wie vorhin ausgeführt) ein Breitbandnetzabschlussgerät einschliesslich eines xDSL-Modems, dieses Gerät kann jedoch auch eine bestimmte Funktion ausüben z.B. als Router oder Settop-Box. Dabei ist ein xDLS-Modem für die Sicherstellung der Schicht 1 Funktion stets subsummiert.

Der vorliegenden Erfindung liegt nun die Aufgabe zugrunde, ein Verfahren zur Konfigurierung eines Gerätes mit dem Protokoll DHCP anzugeben, das die vorstehend angegebenen Beschränkungen vermeidet.

Diese Aufgabe wird erfindungsgemäss durch das im Patentanspruch 1 angegebene Verfahren gelöst. Gemäss dem erfindungsgemässen Verfahren, wonach
- A: das Gerät eine gerichtete Anfrage an die Adresse für den DNS-Dienst sendet,
- B: die Adresse des DNS-Dienstes der Adresse des DHCP-Servers (14) gleichgesetzt wird;
ist ein Verfahren geschaffen, bei dem kein Multicast/Broadcast vom zu konfigurierenden Gerät an den Zugangsserver gesendet werden muss. Dies wird erreicht durch die Gleichsetzung der IP-Adresse des DHCP-Server mit der IP-Adresse des DNS-Dienstes.

Vorteilhafte Ausgestaltungen und Implementationen des erfindungsgemässen Verfahrens sind in weiteren Ansprüchen angegeben.

Ein Ausführungsbeispiel der Erfindung wird nachfolgend anhand der Zeichnung näher erläutert. Dabei zeigt:
- Figur 1: Prinzipielle Darstellung der Anbindung einer Settop-Box an einen Zugangsserver;
- Figur 2: Meldungsablauf.

Figur 1 zeigt eine prinzipielle Darstellung der Anbindung einer Settop-Box 4 an einen Zugangsserver 10, deren Kommunikation über das Protokoll PPPoE abgewickelt wird. Es werden nur jene Elemente hier erläutert, die für das Verständnis einer Ausführungsform der vorliegenden Erfindung unbedingt erforderlich sind. In der Figur 1 ist eingeschlossen, dass eine Mehrzahl von zu konfigurierenden Geräten 4 vorgesehen ist, jedoch nur ein einziges Gerät 4 dargestellt ist. Für die Adresszuteilung an die zu konfigurierenden Geräte 4 ist vorteilhafterweise vorgesehen, dass der Zugangsserver 10 über einen bestimmten Adressbereich verfügt, der an die Anzahl der gleichzeitig angeschalteten Geräte 4 angepasst ist.

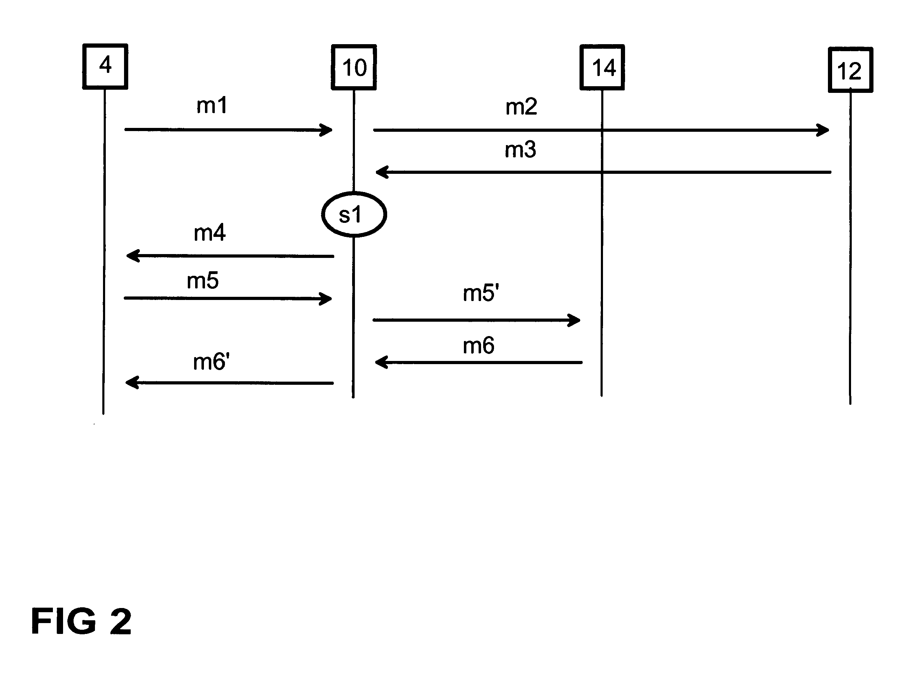

Der Meldungsablauf bei Durchführung einer bevorzugten Ausführungsform des erfindungsgemässen Verfahren ist der Figur 2 zu entnehmen und beinhaltet im einzelnen:
- m1: Etablierung einer PPPoE-Session zwischen Gerät 4 und BRAS 10.
- m2: Anfrage (Request) zur Authentifizierung an den Dienst RADIUS 12.
- m3: Antwort (response) an BRAS 10 mit dem Inhalt Authentifizierung in Ordnung/fehlgeschlagen.
- S1: BRAS 10 öffnet Session bei einer erfolgreichen Authentifizierung; BRAS 10 verfügt über einen vorgegebenen, jedoch wählbaren IP-Adress-Bereich.
- m4: BRAS 10 teilt dem Gerät 4 eine IP-Adresse aus einem vorgegebenen Adress-Bereich zu, zusätzlich ist in der Meldung m4 die DNS-Adresse (für Namensauflösung) enthalten, die identisch ist zur DHCP-Adresse.
- m5: Gerät 4 sendet eine gerichtete Meldung (unicast) DHCP_Inform an BRAS10.
- m5': da die Meldung m5 gerichtet ist, wird sie an den DHCP-Server weitergeleitet. Unter derselben Adresse ist jedoch der DNS-Service erreichbar.
- m6: DHCP_Inform Antwort wird vom DHCP-Dienst an BRAS übermittelt.
- m6': Meldung m6 wird von BRAS 10 an Gerät 4 weitergeleitet und das Gerät kann sich anhand der DHCP_Inform Antwort konfigurieren.

Wie oben unter der Meldung m4 bereits erläutert, haben die Dienste DHCP und DNS die gleiche IP-Adresse. Diese können auf demselben Server ablaufen, da sie sich durch ihre Portnummer unterscheiden.

Neben den Basiseinstellungen für das Gerät 4 mit seiner IP-Adresse und der DNS-Adresse durch den Zugangsserver können weitere Einstellungen vorgesehen sein, wie z.B. Boot File und Zeitserver. Diese Einstellung erfolgen vom DHCP Server 12

Das vorgenannte Ausführungsbeispiel bezog sich auf ein Breitbandnetzabschlussgerät B-NT. Die Erfindung kann aber für eine Settop-Box oder einen Router für ein integriertes Zugangsgerät IAD angewendet angewendet werden.

### Liste der verwendeten Bezugszeichen

- 1: LAN, Ethernet
- 2: Rechner, Terminal, Gerät, Teilnehmergerät
- 3: xDSL-Strecke
- 4: Set Top Box einschliesslich xDSL-Modem, Breitband-Netzabschlussgerät.
- 5: SDH
- 6: DSLAM
- 7: ATM Access, Ethernet over ATM
- 8: ATM Konzentrator
- 9: IP Core
- 10: BRAS, Broadband Remote Access Server; Zugangsserver
- 12: RADIUS, Remote Access Dial In User Service
- 14: Server gegliedert in DHCP-Server bzw. DHCP-Dienst und DNS-Dienst
- m1: PPPoE-Session etablieren
- m2: request für Authentifizierung
- m3: Antwort zum request m2
- m4: Antwort auf m1: Zuteilung einer IP-Adresse für das Gerät, zusätzlich IP-Adresse, wobei Adresse des DNS-Dienstes = Adresse des DHCP-Servers
- m5, m5': gerichtete Anfrage für eine Namensauflösung, wird von BRAS durchgereicht an DNS.
- m6, m6': Antwort → DHCP-Parameterliste

### Liste der verwendeten Abkürzungen und Akronyme

- ATM: Asynchron Transfer Mode
- B-NT: Breitband Netzabschluss, Breitband Netzabschlussgerät, broadband network termination; Settop-Box
- BRAS: Broadband Remote Access Server; Zugangsserver
- DHCP: Abkürzung für Dynamic Host Configuration Protocol. Durch DHCP kann ein mit dem Internet verbundenes Netzwerk verschiedene Einstellungen einem Host zuweisen, wenn der Host eine Verbindung mit dem Netzwerk herstellt.
- DNS: Abkürzung für «Domain Name System». Das System, durch das die Hosts im Internet sowohl Domänen-Adressen (z.B. bluestem.prairienet.org) als auch IP-Adressen (z.B. 192.17.3.4) besitzen. Die Domänen-Adresse wird von Benutzern verwendet und automatisch in die numerische IP-Adresse konvertiert, die von der Software zum Weiterleiten von Paketen benutzt wird.
- «DNS»: ist außerdem die Abkürzung für »Domain Name Service« und stellt das Internet-Dienstprogramm dar, welches das Domain Name System (siehe oben unter DNS) implementiert. DNS-Server, die auch Name-Server genannt werden, verwalten die Datenbanken mit den Adressen. Auf die Server können die Benutzer transparent zugreifen.
- DSLAM: Digital Subscriber Line Access Multiplexer
- IAD: Integrated Access Device
- IP: Internet Protocol
- LAN: Local Area Network
- PPPoE: Point-to-Point Protocol over Ethernet
- RADIUS: Remote Access Dial In User Service
- SDH: Synchrone digitale Hierchie
- STB: Settop-Box
- xDSL: Digital Subscriber Line

### Liste der zitierten Schriften; Angaben zu Fundstellen

- [1]: DSL Forum Technical Report
TR-044
Auto-Configuration for Basic Internet (IP-based)
Services; December 2001
Quelle: http://www.dslforum.org
- [2]: DSL Forum Technical Report
TR-046
Auto-Configuration Architcture & Framework (IP-based) Services; February 2002
Quelle: http://www.dslforum.org

## Patentansprüche

1. Verfahren zur Verfahren zur Konfigurierung eines Gerätes (4) mit dem Protokoll DHCP, das mit einem Zugangsserver (10) über das Protokoll PPPoE verbindbar ist, wobei vom Zugangsserver (10) eine Session gestartet wird und dem Gerät (4) eine IP-Adresse zugeteilt und eine zuvor nicht bekannte IP-Adresse eines DNS-Servers (14) übermittelt wird, **gekennzeichnet durch** die Verfahrensschritte:
A das Gerät (4) sendet eine gerichtete Anfrage (m4, DHCP_INFORM) an die Adresse für den DNS-Dienst;
B die Adresse des DNS-Dienstes wird der Adresse des DHCP-Servers (14) gleichgesetzt.

2. Verfahren nach Anspruch 1,
**dadurch gekennzeichnet, dass**
vor Ausführung des Verfahrensschrittes A eine Authentifizierung des Gerätes (4) durch einen Dienst (12), z.B. RADIUS erfolgt.

3. Verfahren nach Anspruch 2,
**dadurch gekennzeichnet, dass**
dem Gerät (4) nur dann eine IP-Adresse zugeteilt wird, wenn die Authentifizierung erfolgreich ausgeführt werden konnte.

4. Verfahren nach Anspruch 3,
**dadurch gekennzeichnet, dass**
der Zugangsserver (10) einen vorgegebenen Adressbereich aufweist, aus dem die Zuteilung einer IP-Adresse für das Gerät (4) vorgenommen wird.

5. Verfahren nach einem der Ansprüche 1 bis 4,
**dadurch gekennzeichnet, dass**
die Dienste DHCP und DNS auf demselben Server laufen können, und sich durch Portnummern unterscheiden.

6. Verfahren nach einem der Ansprüche 1 bis 5,
**dadurch gekennzeichnet, dass**
weitere Einstellungen, z.B. Boot File und Zeitserver, durch den DHCP-Server (14) vorgenommen werden.

## Geänderte Patentansprüche

### Geänderte Patentansprüche gemäss Regel 86(2) EPÜ.

**1.** Verfahren zur Konfigurierung eines Gerätes (4) mit dem Protokoll DHCP, das mit einem Zugangsserver (10) über das Protokoll PPPoE verbunden wird, wobei vom Zugangsserver (10) eine Session gestartet wird und dem Gerät (4) eine IP-Adresse zugeteilt und eine zuvor nicht bekannte IP-Adresse eines DNS-Servers (14) übermittelt wird,
**gekennzeichnet durch** die Verfahrensschritte:
A das Gerät (4) sendet eine gerichtete Anfrage (m4) an die Adresse für den DNS-Dienst;
B die Adresse des DNS-Dienstes wird der Adresse des DHCP-Servers (14) gleichgesetzt.

**2.** Verfahren nach Anspruch 1,
**dadurch gekennzeichnet, dass**
vor Ausführung des Verfahrensschrittes A eine Authentifizierung des Gerätes (4) durch einen Dienst (12), z.B. RADIUS erfolgt.

**3.** Verfahren nach Anspruch 2,
**dadurch gekennzeichnet, dass**
dem Gerät (4) nur dann eine IP-Adresse zugeteilt wird, wenn die Authentifizierung erfolgreich ausgeführt werden konnte.

**4.** Verfahren nach Anspruch 3,
**dadurch gekennzeichnet, dass**
der Zugangsserver (10) einen vorgegebenen Adressbereich aufweist, aus dem die Zuteilung einer IP-Adresse für das Gerät (4) vorgenommen wird.

**5.** Verfahren nach einem der Ansprüche 1 bis 4,
**dadurch gekennzeichnet, dass**
die Dienste DHCP und DNS auf demselben Server laufen können, und sich durch Portnummern unterscheiden.
